# EUROPEAN PATENT SPECIFICATION

(11) **EP 4 050 053 B1**
(45) Date of publication and mention of the grant of the patent: **15.11.2023**
(21) Application number: 22158707.4
(22) Date of filing: 25.02.2022
(51) Int. Cl.: C08G 18/02, C08G 18/18, C08G 18/22, C08G 18/40, C08G 18/42, C08G 18/48, C08G 18/76, C08K 5/00

(54) **ISOPROPYLIDENEDIPHENOL-BASED POLYETHERS POLYOLS, PROCESSES FOR THEIR PRODUCTION, AND FOAMS PRODUCED THEREFROM**
POLYETHER AUF ISOPROPYLIDENDIPHENOLBASIS, VERFAHREN ZU IHRER HERSTELLUNG UND DARAUS HERGESTELLTE SCHÄUME
POLYOLS À BASE DE POLYÉTHERS D'ISOPROPYLIDÈNEDIPHÉNOL, LEURS PROCÉDÉS DE PRODUCTION ET LES MOUSSES PRODUITES À PARTIR DE CEUX-CI

(30) Priority: 25.02.2021 US 202117185091; 14.02.2022 US 202217670727
(43) Date of publication of application: 31.08.2022
(73) Proprietor: Covestro LLC, Pittsburgh, PA 15205-9741 (US)
(72) Inventor: LEWIS, Sharlene, 15205-9723 Pittsburgh (US); LOVEDAY, Tony, 26062 Weirton (US); REXRODE, Eric, 15057 McDonald (US)
(74) Representative: Levpat

(56) References cited:
- EP-B1- 3 294 787
- KR-B1- 100 388 807

## Description

### FIELD

This specification relates to isopropylidenediphenol-based polyether polyols and to processes for their production. This specification also relates to foams produced using such isopropylidenediphenol-based polyether polyols, such as PUR-PIR rigid foams, as well as to processes for producing such foams.

### BACKGROUND

Bisphenol A ("BPA") is used in a wide variety of applications. Raw BPA is processed by purifying the reaction product of acetone and phenol by distillation, wherein a so-called BPA resin occurs as a distillation residue. Depending on the intensity of the distillation, this BPA resin can have considerable proportions of 4,4'-isopropylidenediphenol. The remaining proportions are distributed among other structural elements derived from phenol, acetone and Bisphenol A, such as the 2,4'- and 2,2' isomers of the bisphenol base body.

For economic and sustainability reasons, it would be desirable to find a useful outlet for such a distillation residue, such as in the production of polyols for use in polyurethane-polyisocyanurate ("PUR-PIR") rigid foam-producing formulations. The successful incorporation of BPA production residues in the production of PUR-PIR rigid foams would avoid them being disposed of, such as by incineration, thereby conserving the environment and contributing to the reduction in the use of inherently scarce raw materials, and ultimately of crude oil.
EP 3 294 787 B1 relates to an ethoxylated BPA resin, a method of its production and a method for producing a PUR/PIR-rigid foam using a polyol component comprising the ethoxylated BPA resin. The ethoxylated BPA resin comprises a) at least 10 % w/w of an ethoxylate of 4,4'-isopropylidenediphenol, b) at least 5 % w/w, preferably at least 10 % w/w, of an ethoxylate of 2,4'- and 2,2'-isopropylidenediphenol, and c) at least 10 % w/w of an ethoxylate of components containing structural elements which are derived from phenol, acetone and / or isopropylidenediphenol, but which are not isomers of the isopropylidenediphenol.
KR 100 388 807 B 1 relates to various types of polyether polyol mixtures prepared from waste generated during the production of bisphenol A and a method for producing the same. In the production of the polyether polyol, waste containing a polyvalent aromatic mixture generated during the production of bisphenol A is used as an initiator to polymerize propylene oxide in the presence of a common basic catalyst to obtain a polyether polyol which can be used to produce a rigid polyurethane foam.

There are, however, challenges to successfully utilizing a BPA production residue in such a way. In many cases, for example, PUR-PIR rigid foams are produced in the form of boards produced in a continuous manner, using a lamination process in which a foam-forming reaction mixture is deposited on a facing material as it travels along a conveyor. The foam-forming reaction mixture is produced by combining an isocyanate-reactive composition, typically including polyols, and a polyisocyanate at a mix head from which it flows onto the facing material. To produce high quality foam boards, the viscosity and reactivity of the reaction mixture should be such that the reaction mixture is able to flow along the facing material prior to hardening. As the foam-forming reaction mixture reacts, it rises until the rise is restricted by a second facing material, which defines the thickness of the resulting foam laminate.

As a result, it would be desirable to provide isopropylidenediphenol-based polyether polyols suitable for use in PUR-PIR rigid foam formulations that can successfully be used in a continuous lamination process to produce PUR-PIR rigid foam composite elements that have good physical properties and which pass relevant flammability tests.

### SUMMARY

In certain respects, the invention described in this specification relates to polyether polyols. The polyether polyols comprise: (a) an alkoxylate of 4,4'-isopropylidenediphenol; (b) an alkoxylate of 2,4'- isopropylidenediphenol, 2,2'-isopropylidenediphenol, or a mixture thereof; (c) an alkoxylate of components comprising structural elements which are derived from phenol, acetone, isopropylidenediphenol or a mixture of any two or more thereof, but which are not isomers of isopropylidenediphenol; and (d) an alkoxylate of a diol that has a molecular weight less than the molecular weight of isopropylidenediphenol and that does not contain structural elements derived from phenol, acetone, isopropylidenediphenol, or a mixture of any two or more thereof. In these polyether polyols, the alkoxylate of the diol that has a molecular weight less than the molecular weight of isopropylidenediphenol is present in an amount of 0.1 to 10% by weight, based on the total weight of the polyether polyol.

In other respects, the invention described in this specification relates to processes for preparing a polyether polyol. These processes comprise alkoxylating, in the presence of a catalyst, an active hydrogen-containing initiator composition comprising: (i) 4,4'-isopropylidenediphenol; (ii) 2,4'- isopropylidenediphenol, 2,2'-isopropylidenediphenol, or a mixture thereof; (iii) a component comprising structural elements which are derived from phenol, acetone, isopropylidenediphenol, or a mixture of any two or more thereof, but which are not isomers of isopropylidenediphenol; and (iv) 0.1 to 20% by weight, based on the total weight of the active hydrogen-containing initiator composition, of a diol that has a molecular weight less than the molecular weight of isopropylidenediphenol and that does not contain structural elements derived from phenol, acetone, isopropylidenediphenol, or a mixture of any two or more thereof. Preferred examples of components "comprising structural elements which are derived from phenol, acetone, isopropylidenediphenol or a mixture of any two or more thereof, but which are not isomers of isopropylidenediphenol" are compounds with chromane and/or indane base bodies. Preferred example of "compounds with chromane and/or indane base bodies" are 4-(2,2,4-trimethyl-3.4-dihydro-2H-chromen-4-yl)phenol (1), 4-(2,4,4-trimethyl-3-4-dihydro-2H-chromen-2-yl)phenol (2), 3-(4-hydroxyphenyl)-1,1,3-trimethyl-2H-inden-5-ol (3), and 1-(4-hydroxyphenyl)-1,3,3-trimethyl-2H-inden-5-ol (4). It is particularly preferred that the "components comprising structural elements which are derived from phenol, acetone, isopropylidenediphenol or a mixture of any two or more thereof, but which are not isomers of isopropylidenediphenol" comprise, even more preferred consist of, any one or more of compounds (1) to (4).

In other respects, the invention described in this specification relates to foam-forming reaction mixtures that include such polyether polyols and processes for producing PUR-PIR rigid foams using such foam-forming reaction mixtures.

### DETAILED DESCRIPTION

Various embodiments are described and illustrated in this specification to provide an overall understanding of the structure, function, properties, and use of the disclosed inventions. It is understood that the various embodiments described and illustrated in this specification are non-limiting and non-exhaustive. Thus, the invention is not limited by the description of the various non-limiting and non-exhaustive embodiments disclosed in this specification. The features and characteristics described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. The various embodiments disclosed and described in this specification can comprise, consist of, or consist essentially of the features and characteristics as variously described herein.

In this specification, other than where otherwise indicated, are prefaced and modified in all instances by the term "about", in which the numerical parameters possess the inherent variability characteristic of the underlying measurement techniques used to determine the numerical value of the parameter. At the very least, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of " 1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein.

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As used herein, the term "functionality", when used with reference to a polyol, such as a polyether polyol, refers to the average number of reactive hydroxyl groups, -OH, present per molecule of the polyol or polyol blend that is being described. As used herein, the "arithmetically calculated functionality" of a polyol refers to the average functionality of a polyol based solely on the functionality of, and the relative amounts of, the starter compound(s) or initiator(s) used to prepare the polyether polyol.

As used herein, the term "measured OH number" or "measured hydroxyl number" refers to the number of reactive hydroxyl groups available for reaction, and is expressed as the number of milligrams of potassium hydroxide equivalent to the hydroxyl content of one gram of the polyol, and is determined according to ASTM D4274-16. The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 × 1000)/OH number.

The viscosity values of a polyol reported herein refer to a viscosity determined by ASTM-D4878-15. An Anton-Paar SVM 3000 viscometer at 25°C was used. This instrument has been demonstrated to give equivalent results as can be generated with ASTM-D4878-15, in which the instrument is calibrated using mineral oil reference standards of known viscosity.

The number average and weight average (Mₙ and M_{w}) molecular weights reported herein can be determined by gel-permeation chromatography (GPC) using a method described in DIN 55672-1 of March 2016 with a mixed bed column (Agilent PL Gel; SDVB; 3 micron Pore diameter: 1xMixed-E + 5 micron Pore diameter: 2xMixed-D), refractive index (RI) detection and calibrated with polyethylene glycol as the standard.

As used in this specification, "PUR-PIR rigid foam" ("polyurethane-polyisocyanurate rigid foam") refers to foams produced using an excess of isocyanate groups as compared to isocyanate-reactive groups, so in addition to urethane groups, isocyanurate structural elements are also formed due to isocyanate-trimerization reactions, and possibly urea groups from the reaction with water. Besides urethane groups, isocyanurate structures, and possibly urea groups, the PUR-PIR rigid foams may contain other groups, such those appearing by the reaction of the isocyanate group with other groups as well as with hydroxyl groups or other isocyanate groups. For example, the reaction of the isocyanate group with urea groups results, for example, in biuret structures, and the reaction of the isocyanate group with urethane groups results, for example, in allophanate structures. These structures are then present in the polymer together with the urethane-, urea- and isocyanurate groups.

As indicated, certain embodiments of this specification relate to polyether polyols. In some implementations, the polyether polyols have an arithmetically calculated functionality of at least 1.5, such as 1.5 to 3, 1.5 to 2.5, 1.8 to 2.5 or 1.8 to 2.2. In some embodiments, the polyether polyols have a viscosity at 25°C (as determined by ASTM-D4878-15) of no more than 5000 mPa • s, such as 1000 to 5000 mPa • s, 3000 to 5000 mPa • s, 1000 to 4900 mPa • s or 3000 to 4900 mPa • s. In some embodiments, the polyether polyols have a measured hydroxyl number (as determined by ASTM-D4274-16) of 100 to 400 mg KOH/g, 120 to 300 mg KOH/g, or 130 to 250 mg KOH/g, 150 to 200 mg KOH/g or 160 to 180 mg KOH/g.

The polyether polyols of this specification comprise: (a) an alkoxylate of 4,4'-isopropylidenediphenol; (b) an alkoxylate of 2,4'-isopropylidenediphenol, 2,2'-isopropylidenediphenol, or a mixture thereof; (c) an alkoxylate of components comprising structural elements which are derived from phenol, acetone, isopropylidenediphenol or a mixture of any two or more thereof, but which are not isomers of isopropylidenediphenol; and (d) an alkoxylate of a diol that has a molecular weight less than the molecular weight of isopropylidenediphenol and that does not contain structural elements derived from phenol, acetone, isopropylidenediphenol, or a mixture of any two or more thereof.

The alkoxylation may be carried out by, for example, placing an H-functional starter composition that comprises a BPA resin comprising (i) 4'-isopropylidenediphenol; (ii) 2,4'- and/or 2,2'-isopropylidenediphenol, and (iii) components comprising structural elements which are derived from phenol, acetone and/or isopropylidenediphenol, but which are not isomers of isopropylidenediphenol, into a stirred autoclave together with a diol that has a molecular weight less than the molecular weight of isopropylidenediphenol and that does not contain structural elements derived from phenol, acetone and/or isopropylidenediphenol and a suitable catalyst and by metering alkylene oxide in at an elevated temperature.

More specifically, in some implementations, the BPA resin is a composition that occurs as a distillation residue during the production of BPA. In some implementations, the BPA resin comprises: (i) at least 10% by weight, such as 10 to 60% by weight, of 4,4'-isopropylidenediphenol; (ii) at least 5% by weight, such as 10 to 40% by weight of 2,4'- and/or 2,2'-isomers of the bisphenol base body; and (iii) at least 10% by weight, such as 10 to 60% by weight, of compounds with chromane and/or indane base bodies, wherein each such weight percent is based on the total weight of the BPA resin. Exemplary such compounds with a chromane and/or indane base body are, without limitation, 4-(2,2,4-trimethyl-3.4-dihydro-2H-chromen-4-yl)phenol, which has the Structure (1), 4-(2,4,4-trimethyl-3-4-dihydro-2H-chromen-2-yl)phenol, which has the Structure (2), 3-(4-hydroxyphenyl)-1,1,3-trimethyl-2H-inden-5-ol, which has the Structure (3), and 1-(4-hydroxyphenyl)-1,3,3-trimethyl-2H-inden-5-ol, which has the Structure (4), in which:
Structure (1) is 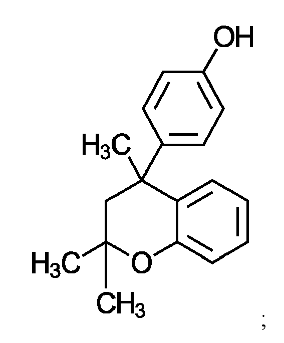
Structure (2) is 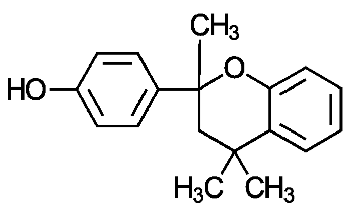
Structure (3) is 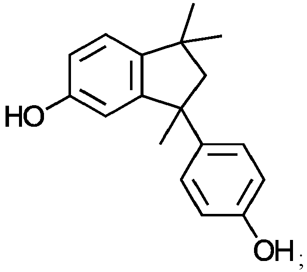 and
Structure (4) is

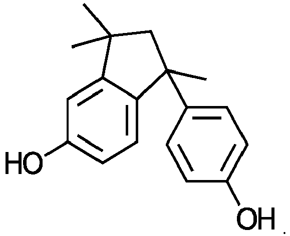

In addition to the BPA resin, H-functional starter composition further comprises a diol having a molecular weight less than the molecular weight of isopropylidenediphenol and that does not contain structural elements derived from phenol, acetone and/or isopropylidenediphenol. Examples of such diols include, without limitation, ethylene glycol (molar mass of 62 g/mol), propylene glycol (molar mass of 76 g/mol), dipropylene glycol (molar mass of 134 g/mol), diethylene glycol (molar mass of 106 g/mol), 1,2-diphenyl-ethane-1,2-diol (molar mass of 214 g/mol), triethylene glycol (molar mass of 150 g/mol), butylene glycol (molar mass of 90 g/mol), cyclohexanediol (molar mass of 116 g/mol), cyclohexane-1,4-dimethanol (molar mass of 144 g/mol), pentanediol (molar mass of 104 g/mol), hexanediol (molar mass of 118 g/mol), neopentyl glycol (molar mass of 104 g/mol), as well as mixtures of any two or more thereof. In some implementations, such a diol is selected that has a molar mass of less than 150 g/mol, less than 100 g/mol, or, in some cases, less than 80 g/mol.

In some implementations, the foregoing diol with a molecular weight less than the molecular weight of isopropylidenediphenol and that does not contain structural elements derived from phenol, acetone and/or isopropylidenediphenol is present in an amount of 0.1 to 20% by weight, 0.1 to 10% by weight, 1 to 5% by weight, or 1 to 3% by weight, based on the total weight of the H-functional starter composition employed.

To form the polyether polyol, the H-functional starter composition is reacted with an alkylene oxide. In some implementations, the alkoxylation reaction can be conducted so as to result in a polyether polyol that comprises an internal block comprising polymerized ethylene oxide moieties and an external cap comprising polymerized propylene oxide moieties. To produce such a propylene oxide-capped polyether polyol, the H-functional starter composition may be reacted with a first portion of alkylene oxide, in the presence of a catalyst, to form an intermediate polymer having hydroxyl end-group(s), and the intermediate polymer reacted with a second portion of alkylene oxide to form the polyether polyol.

More specifically, in some cases, the first portion of alkylene oxide comprises ethylene oxide and the second portion of alkylene oxide comprises propylene oxide. For example, in some cases, the first portion of alkylene oxide may comprise ethylene oxide and, if desired, include other alkylene oxides besides ethylene oxide, such as, without limitation, propylene oxide, 1,2-butylene oxide, or 2,3-butylene oxide, styrene oxide, or a mixture of any two or more thereof. In some implementations, however, the first portion of alkylene oxide consists predominantly, or, in some cases, exclusively of ethylene oxide. Thus, in these implementations, ethylene oxide is present in the first portion of alkylene oxide in an amount of at least 50% by weight, at least 80% by weight, at least 90%, at least 95% by weight, or, in some cases, 100% by weight, based on the total weight of the first portion of alkylene oxide. Thus, in these implementations, the resulting polyether polyol comprises an internal block comprising polymerized ethylene oxide moieties, wherein the ethylene oxide moieties are present in an amount of least 50% by weight, at least 80% by weight, at least 90%, at least 95% by weight, or, in some cases, 100% by weight, based on the total weight of the polymerized alkylene oxide moieties of the internal block of the polyether polyol.

In addition, in some implementations, the second portion of alkylene oxide consists predominantly, or, in some cases, exclusively of propylene oxide. Thus, in these implementations, propylene oxide is present in the second portion of alkylene oxide in an amount of at least 50% by weight, at least 80% by weight, at least 90%, at least 95% by weight, or, in some cases, 100% by weight, based on the total weight of the second portion of alkylene oxide. Thus, in these implementations, the resulting polyether polyol comprises an external cap comprising polymerized propylene oxide moieties, wherein the propylene oxide moieties are present in an amount of least 50% by weight, at least 80% by weight, at least 90%, at least 95% by weight, or, in some cases, 100% by weight, based on the total weight of the polymerized alkylene oxide moieties of the external cap of the polyether polyol.

In some embodiments, ethylene oxide is present in an amount of at least 50% by weight or at least 60% by weight, based on the total weight of alkylene oxide used. In some of these implementations, the remainder of the alkylene oxide used may consist predominantly or exclusively of propylene oxide and, as a result, in some implementations, propylene oxide is present in an amount of up to 50% by weight, such as up to 40% by weight, based on the total weight of alkylene oxide that is used to produce the polyether polyol.

Furthermore, in some embodiments, polymerized propylene oxide moieties of the external cap are present in an amount of at least 20% by weight, such as 20 to 50% by weight, 20 to 40% by weight, 30 to 40% by weight, or 35 to 40% by weight, based on the total weight of polymerized alkylene oxide moieties in the polyether polyol. Thus, in some of these embodiments, little or no propylene oxide moieties are present in the internal block.

In some implementations, the molar ratio of BPA resin to ethylene oxide-containing alkylene oxide mixture is chosen such that, per phenolic hydroxyl group, at least 1.5 mols of alkylene oxide are used.

It was discovered, surprisingly, that when isopropylidenediphenol-based polyether polyols of the type described herein were produced using an H-functional starter composition, as described above, that includes the diol having a molecular weight less than the molecular weight of isopropylidenediphenol, in the amounts described above, especially when the polyether polyol also included a propylene oxide external end-cap in which polymerized propylene oxide moieties of the external cap are present in amounts as described above, it was possible to provide an isopropylidenediphenol-based polyether polyol having a viscosity and reactivity profile such that they can be especially suitable for use in foam-formulations to be used in producing PUR-PIR rigid foams according to the lamination process described herein.

Suitable catalysts that may be used for the foregoing alkoxylation include tertiary amines with aliphatic, cycloaliphatic, aromatic and/or araliphatic residues bound to the nitrogen atom, and/or aromatic amines wherein the nitrogen atom may also be a part of a ring system and/or wherein the nitrogen atom may be part of an aromatic system. Also suitable are hydroxides or oxides of alkali and earth alkaline metals.

Specific examples of suitable catalysts include, for example, triethylenediamine, n,n-dimethylcyclohexylamine, 1-methyl-4-dimethylaminoethyl-piperazine, triethylamine, tributylamine, n,n-dimethylbenzylamine, dicyclohexylmethylamine, n,n',n"-tris-(dimethylaminopropyl)hexahydrotriazine, tris-(dimethylaminopropyl)amine, tris(dimethylaminomethyl)phenol, dimethylaminopropylformamide, n,n,n',n'-tetramethylethylenediamine, n,n,n',n'-tetramethylbutanediamine, n,n,n',n'-tetramethylhexanediamine, pentamethyl-diethylenetriamine, pentamethyldipropylenetriamine, tetramethyldiaminoethyl ether, n,n'-dimethylpiperazine, 1-azabicyclo[3.3.0]octane, bis-(dimethylaminopropyl)-urea, n-methylmorpholine, n-ethylmorpholine, n-cyclohexylmorpholine, 2,3-dimethyl-3,4,5,6-tetrahydropyrimidine, triethanolamine, triisopropanolamine, n-methyldiethanolamine, n-ethyldiethanolamine, n,n-dimethylamineoethanol and tris-(n n-di-methylaminopropyl)-s-hexahydrotriazine, 1,2-dimethylimidazole, n-methylimidazole, imidazole and/or n,n-dimethylamineopyridine. Suitable hydroxides of the alkali and earth alkaline metals are lithium- sodium-. potassium-, rubidium-, caesium-, magnesium-, calcium-, strontium- and barium hydroxides.

In some implementations, sodium hydroxide and/or potassium hydroxide catalyst is used at a concentrations of 50 to 5000 ppm, 1000 to 5000 ppm, or 4000 to 5000 ppm.

In some implementations, the BPA resin is used at an elevated temperature of, for example, 50 to 100°C, already with the employed catalyst, and atmospheric oxygen is replaced with nitrogen by repeated evacuation followed by ventilation. If desired, the alkoxylation reaction may takes place at an elevated temperature, such as 70 to 140°C or 90 to 130°C. A solvent can be used in the process if desired. The temperature of the exothermic alkylene oxide addition reaction can be maintained at the desired level by cooling, if desired or necessary.

The addition of the alkylene oxide to the H-functional starter composition is usually conducted continuously over a period of, for example, 2 to 20 hours. However, as previously indicated, in implementations of the processes of this specification, the alkylene oxide is added in at least two portions as described above.

In these implementations, the process comprises a step in which ethylene oxide is either homopolymerized or copolymerized with the H-functional starter composition, often in the presence of a catalyst as described above. In some implementations of this step, ethylene oxide is present in an amount of at least 50% by weight, at least 80% by weight, at least 90%, at least 95% by weight, or 100% by weight, based on the total weight of alkylene oxide employed.

In some cases, the polymerization of the ethylene oxide is carried out at a temperature of 30° to 150°C or 100 to 120°C. The reaction pressure may be atmospheric, subatmospheric, or above atmospheric. The polymerization may be carried out in an inert solvent, if desired, such as an aromatic hydrocarbon. In some implementations, the H-functional starter composition is stirred and the alkylene oxide added in a continuous fashion to the mixture.

After polymerization of the first portion of alkylene oxide to form the internal block, in some embodiments, the resulting intermediate polymer is reacted with a second proportion of alkylene oxide to yield an end-capped polyether polyol. In some implementations of this step, propylene oxide is present in an amount of at least 50% by weight, at least 80% by weight, at least 90%, at least 95% by weight, or, in some cases, 100% by weight, based on the total weight of alkylene oxide employed in the second portion of alkylene oxide to react with the intermediate polymer.

The reaction conditions employed during the end-capping step may be the same as or similar to those used to form the internal block. Removal of ethylene oxide remaining after formation of the internal block prior to the end-capping step may be conducted, if desired.

The amount of propylene oxide to be added to produce the end-cap can vary. However, as mentioned earlier, in some implementations, polymerized propylene oxide moieties of the external cap are present in an amount of at least 20% by weight, such as 20 to 50% by weight, 20 to 40% by weight, or 30 to 40% by weight, or 35 to 40% by weight, based on the total weight of polymerized alkylene oxide moieties in the polyether polyol.

After the end-capping step, a secondary reaction may follow to complete the reaction. This generally happens in several, such as 5 to 30, hours. After the secondary reaction time expires, a vacuum step can take place to remove residues of epoxides from the reaction mixture that may not have reacted. This vacuum step can be carried out at, for example, an absolute pressure of 500 mbar to 10 mbar over a period of 0.1 to 5 hours. The removal of traces of unreacted epoxides or other odor-forming, volatile, organic compounds can also be aided by stripping after the secondary reaction phase and, if desired, also after the vacuum step. During stripping, volatile components are removed, such as residual alkylene oxides or secondary components from the BPA resin that could not be alkoxylated, by introducing inert gases and/or steam into the liquid phase while simultaneously applying a vacuum, such as by passing inert gas and/or steam through at an absolute pressure of 5 mbar to 500 mbar. Alternatively, the introduction of steam can also be produced by the direct introduction of water under the surface of the liquid, such as at a temperature of >100°C and an absolute pressure of 5 mbar to 500 mbar. The quantity of water introduced, or, respectively, the quantity of steam introduced can be determined empirically, and is sometimes between 10 and 30% by weight of water or steam, based on the total weight of the polyether polyol to be purified. The removal of volatile components, either in the vacuum and/or by stripping, may take place at a temperature of, for example, 20°C to 200°C or 50°C to 160°C, often while stirring. The stripping process can also be performed in so-called stripping columns in which an inert gas- or steam flow is passed in counterflow by the product flow, such columns often being columns with fittings or being packed columns. In these columns, the transportation of the volatile auxiliary components is accelerated in the gas phase by enlarging the contact surface between liquid and gas space. In some implementations, stripping is carried out with steam or water, if necessary accompanied by the introduction of inert gas(es). U.S. Patent App. Pub. No. 2014/0243560 A1 at [0017]-[0048], describes reaction conditions and apparatus suitable for carrying out the alkoxylation process described herein.

The polyether polyols produced by the process described herein can be used in a variety of applications. In some cases, however, they are useful for producing PUR-PIR rigid foams. In some cases, the PUR-PIR rigid foam has a bulk density, according to DIN EN ISO 3386-1-98 in the version of September 2010 of 15 kg/m³ to 300 kg/m³ and a compressive strength according to DIN EN 826 in the version of May 1996 of 0.1 MPa to 5 MPa.

Thus, additional aspects of this specification are directed to methods of producing a PUR-PIR rigid foam comprising: a) reacting a polyether polyol of the type described in this specification with b) a polyisocyanate, wherein the reaction occurs in the presence of components comprising c) a blowing agent and d) a catalyst.

Any aliphatic, cycloaliphatic or aromatic di- and/or polyisocyanates (collectively referred to herein as "polyisocyanates") can be used for the production of PUR-PIR rigid foams of this specification. More specifically, in some implementations, the polyisocyanate comprises toluylene diisocyanate (TDI), diphenylmethane diisocyanate (MDI), or, in some cases, a mixture of diphenylmethane diisocyanate and polyphenylene polymethylene polyisocyanates (polymeric MDI). The isocyanates can also be modified, such as by assembling uretdione-, carbamate-, isocyanurate-, carbodiimide-, allophanate-, urethane-groups, or a combination thereof.

In addition to the polyether polyols described herein, the foam-forming reaction mixture may include other compounds with at least two isocyanate-reactive groups, i.e., with at least two hydrogen atoms reactive with isocyanate groups. Examples of such compounds those are having two or more reactive groups selected from OH groups, SH groups, NH groups, NH₂ groups and CH acidic groups, such as β-diketo groups. In some implementations, a compounds with 2 to 8 OH groups is employed, such as other polyether polyols and/or polyester polyols. In some implementations, the hydroxyl value of such other polyether polyols and such polyester polyols is 25 to 850 mg KOH/g or 25 to 450 mg KOH/g. In some implementations, such other polyether polyols and such polyester polyols have a functionality of 2 to 8 and a hydroxyl value greater than 160 mg KOH/g, such as greater than 200 mg KOH/g.

In some implementations, the foam-forming reaction mixture may further comprise a chain-extending and/or cross-linking agent, such as di- or trifunctional amines and alcohols, such those with a molecular weight lower than 400 g/mol, such as 60 to 300 g/mol.

Suitable blowing agents include physical and chemical blowing agents. As used herein, the term "chemical blowing agent" refers to compounds that form gaseous products by reacting with isocyanate. On the other hand, "physical blowing agent", as used herein, refers to compounds which are used in a liquid or gaseous form and do not react chemically with the isocyanate, but which are dissolved or emulsified in the input substances used in the polyurethane production and vaporize under the normal reaction conditions.

Suitable physical blowing agents include, for example, hydrocarbons, such as cyclopentane, isopentane, n-pentane, butane and propane, halogenated hydrocarbons, and other compounds, such as perfluorised alkanes, like perfluorhexane, perfluorised alkenes, such as 1,1,1,2,3,4,5,5,5-nonafluoro-4-(trifluoromethyl)-2-pentene, 1,1,1,3,4,4,5,5,5-nonafluoro-2-(trifluoromethyl)-2-pentene or cis-1,1,1,4,4,4-hexafluoro-2-butene, chlorofluoro alkenes, such as trans-1-chloro-3,3,3-trifluoropropene, and ethers, esters, ketones and/or acetals.. Suitable chemical blowing agents include water and/or carboxylic acids, which, in a reaction with isocyanates, release carbon dioxide while forming urea or amides.

In some implementations, blowing agent is present in an amount of 0.1 to 30% by weight, 0.5 to 20% by weight, or, in some cases, 0.7 to 15% by weight, based on the total weight of the foam-forming reaction mixture. In some such implementations, the blowing agent comprises a hydrocarbon, such as n-pentane and/or cyclopentane, and water.

Suitable catalysts include, without limitation, organic tin compounds, such as tin diacetate, tin dioctoate, dibutyltin dilaurate, and/or strongly basic amines, such as 2,2,2-diazabicyclooctane, triethylamine, triethylenediamine, pentamethyldiethylenetriamine, n,n dimethylcyclohexylamine or bis(n,n dimethylaminoethyl)ether, n,n dimethylbenzylamine and n-methylimidazole, and, to catalyze the PIR reaction, examples include potassium acetate, sodium acetate, sodium-n-[(2-hydroxy-5-nonylphenyl)methyl]-n-methylaminoacetate, 2,4,6-tris[(3-dimethylamino)propyl]hexahydrotriazine, potassium octoate and aliphatic quaternary ammonium salts, such as tetramethylammonium pivalate.

In some implementations, catalyst is present in an amount of 0.05 to 3% by weight or 0.06 to 2% by weight, based on the total weight of the foam-forming reaction mixture.

The foam-forming reaction mixture may include, if desired, any of a variety of other additives, such as flame retardants, fillers, cell regulators, foam stabilizers, surface-active compounds and/or stabilizers against oxidation-related, thermal or microbiological degradation or ageing, as the case may be. Substances are designated as foam stabilizers when they promote the formation of a regular cell structure during foam formation.

Suitable flame retardants include, for example, brominated ethers, brominated alcohols, such as dibrominopentylalcohol, tribrominopentylalcohol and PHT-4-Diol, as well as chlorinated phosphates such as tris-(2-chlorethyl)phosphate, tris-(2-chlorisopropyl)phosphate, tris(1,3-dichlorisopropyl)phosphate, tris-(2,3-dibrompropyl)phosphate and tetrakis-(2-chlorethyl)-ethylenediphosphate. Other than the halogen-substituted phosphates, inorganic flame retardants, such as red phosphorus, preparations containing red phosphorus, aluminum oxide hydrate, antimony trioxide, ammonium polyphosphate, calcium sulfate or cyanuric acid derivatives, such as melamine or mixtures of at least two flame retardants, such as ammonium polyphosphates and melamine as well as, if necessary, starch, can also be used. To provide further liquid, halogen-free retardants, diethyl-ethylphosphonate, triethylphosphate, dimethyl propyl phosphonate, diphenyl cresyl phosphate and others can be used.

In some implementations, flame retardant is present in an amount of 0.3 to 25% by weight or 0.5 to 5% by weight, based on total weight of the foam-forming reaction mixture.

In some implementations, polyisocyanate is present in the foam-forming reaction mixture in an amount sufficient to provide an isocyanate index of >100, such as 110 to 600, 150 to 500, or 180 to 450. As will be understood, "isocyanate index" refers to the quotient of moles of isocyanate groups used and moles of isocyanate reactive groups actually used, multiplied by 100: Index=(mols of isocyanate groups/mols of isocyanate reactive groups)* 100

The PUR-PIR rigid foams of this specification can be produced discontinuously or continuously. In some implementations, however, a continuous double belt method is employed to produce a composite elements containing a PUR-PIR rigid foam core and one or more surface layers adhered to a face of the core, wherein flexible and/or rigid materials can be used as surface layers. For example, in some implementations, the surface layer may comprise concrete, wood, particle board, aluminum, copper, steel, stainless steel, paper, mineral wool and plastic, as well as multilayer composites. Exemplary plastics are acrylonitrile butadiene styrene copolymers, polyethylene, polystyrene, polyvinyl chloride and polypropylene.

More specifically, in some implementations, the PUR-PIR rigid foam is produced by depositing a foam-forming reaction mixture onto a first facing material as it is being fed on a conveyer. The foam-forming reaction mixture reacts in the vertical space defined between the first facing material and a second facing material, thereby rising until the rise is restricted by the second facing material, which defines the thickness of the resulting composite element. In certain embodiments, the thickness is ¼ inch (0.635 cm) to 1 inch (2.54 cm), such as ¼ inch (0.635 cm) to ¾ inch (1.905 cm), or, in some cases, ½ inch (1.27 cm).

While the polyurethane foam-forming reaction mixture is conveyed, the vertical expansion of the composition is restricted while the horizontal expansion of the mixture is restricted in the direction the composition is being conveyed by the reacted foam ahead, and in the opposite direction by the continuous flow of new reacting foam-forming composition behind it. Accordingly, the expanding mixture can flow laterally, perpendicular to the direction of the conveyor path, where it can expand. In certain embodiments, the polyurethane foam-forming composition is conveyed at a speed of at least 50 feet/minute (15 meters/minute), such as at least 80 feet/minute (24 meters/minute), such as 50 to 200 feet/minute (15 to 61 meters/minute), or, in some cases 80 to 120 feet/minute (24 to 37 meters/minute).

The PUR-PIR rigid foams described herein often have a closed cell content greater than 90% or greater than 95%. In some implementations, the PUR-PIR rigid foams produced as described herein have a density from 25 g/m³ to 300 g/m³ or 28 g/m³ to 50 g/m³.

The non-limiting and non-exhaustive examples that follow are intended to further describe various non-limiting and non-exhaustive implementations without restricting the scope of the implementations described in this specification.

### EXAMPLES

### Example 1 - Comparative

284.5 g of molten BPA resin and 5.9 g of 45.4% aqueous potassium hydroxide solution was added to a 1L reactor that was preheated to 110-120°C. The reactor was then sealed. While stirring, the reactor temperature was increased to 120°C. Oxygen was removed by filling the reactor with nitrogen to a pressure of 40 psia (2.8 bar [absolute]) and then venting the reactor to reduce the pressure to atmospheric pressure. This was repeated three times. The reactor was then filled with nitrogen to a pressure of 20 psia (1.4 bar [absolute]). 416.1 g of ethylene oxide ("EO") was then introduced over 4.7 hours. The maximum pressure observed during EO dosing was 43 psia (3.0 bar [absolute]). After completion of the ethoxylation the reactor was held at temperature for a sufficient time to react the ethylene oxide. The reactor was cooled to 90°C and 5.2 g of a 88% aqueous lactic acid solution was added. The temperature was increased to 120⁰C and the polyol was stripped under vacuum for 1 hour. The reactor was cooled to 90°C and 0.4 g of Irganox 1076 was added and the final polyol collected.

### Example 2 - Comparative

312.8 g of molten BPA resin and 6.2 g of 45.4% aqueous potassium hydroxide solution was added to a 1L reactor that was preheated to 110-120⁰C. The reactor was then sealed. While stirring, the reactor temperature was increased to 120°C. Oxygen was removed by filling the reactor with nitrogen to a pressure of 40 psia (2.8 bar [absolute]) and then venting the reactor to reduce the pressure to atmospheric pressure. This was repeated three times. The reactor was then filled with nitrogen to a pressure of 20 psia (1.4 bar [absolute]). 384.0 g of ethylene oxide ("EO") was then introduced over 4.25 hours. The maximum pressure observed during EO dosing was 43 psia (3.0 bar [absolute]). After completion of the ethoxylation the reactor was held at temperature for a sufficient time to react the ethylene oxide. The reactor was cooled to 90°C and 5.3 g of a 88% aqueous lactic acid solution was added. The temperature was increased to 120⁰C and the polyol was stripped under vacuum for 1 hour. The reactor was cooled to 90⁰C and 0.4 g of Irganox 1076 were added and the final polyol collected.

### Example 3 - Comparative

228.7 g of molten BPA resin and 6.2 g of 45.4% aqueous potassium hydroxide solution was added to a 1L reactor that was preheated to 110-120⁰C. The reactor was then sealed. While stirring, the reactor temperature was increased to 120⁰C. Oxygen was removed by filling the reactor with nitrogen to a pressure of 40 psia (2.8 bar [absolute]) and then venting the reactor to reduce the pressure to atmospheric pressure. This was repeated three times. 278.1 g of propylene oxide ("PO") was then introduced over 3.7 hours. The maximum pressure observed during PO dosing was 53 psia (3.7 bar [absolute]). After completion of the propoxylation the reactor was held at temperature for a sufficient time to react the propylene oxide. The reactor was cooled to 90⁰C and 5.4 g of a 88% aqueous lactic acid solution was added. The temperature was increased to 120⁰C and the polyol was stripped under vacuum for 0.75 hours. The reactor was cooled to 90⁰C and 0.3 g of Irganox 1076 were added and the final polyol collected.

### Example 4 - Comparative

345.0 g of molten BPA resin and 6.2 g of 45.4% aqueous potassium hydroxide solution was added to a 1L reactor that was preheated to 110-120⁰C. The reactor was then sealed. While stirring, the reactor temperature was increased to 120°C. Oxygen was removed by filling the reactor with nitrogen to a pressure of 40 psia (2.8 bar [absolute]) and then venting the reactor to reduce the pressure to atmospheric pressure. This was repeated three times. 419.3 g of propylene oxide ("PO") was then introduced over 5.5 hours. The maximum pressure observed during PO dosing was 60 psia (4.1 bar [absolute]). After completion of the propoxylation the reactor was held at temperature for a sufficient time to react the propylene oxide. The reactor was cooled to 90⁰C and 5.4 g of a 88% aqueous lactic acid solution was added. The temperature was increased to 120⁰C and the polyol was stripped under vacuum for 0.75 hours. The reactor was cooled to 90⁰C and 0.4 g of Irganox 1076 were added and the final polyol collected.

### Example 5 - Comparative

4385.1 g of molten BPA resin and 74.3 g of 45.4% aqueous potassium hydroxide solution was added to a 8 gallon reactor that was preheated to 100-105⁰C. The reactor was then sealed. While stirring, the reactor temperature was increased to 120⁰C. Oxygen was removed by filling the reactor with nitrogen to a pressure of 40 psia (2.8 bar [absolute]) and then venting the reactor to reduce the pressure to atmospheric pressure. This was repeated twice. The reactor was then filled with nitrogen to a pressure of 20 psia (1.4 bar [absolute]). 3227.0 g of ethylene oxide ("EO") was then introduced over 2.25 hours. The maximum pressure observed during EO dosing was 43 psia (3.0 bar [absolute]). After completion of the ethoxylation the reactor was held at temperature for a sufficient time to react the ethylene oxide. Next, 1857.8 g of propylene oxide ("PO") was introduced over 2.5 hours. The maximum pressure observed during PO dosing was 43 psia (3.0 bar [absolute]). After completion of the propoxylation, the reactor was held at temperature for a sufficient time to react the propylene oxide. Next, the reactor was cooled to 80⁰C and 285.0 g of a 20% aqueous lactic acid solution was added. The temperature was increased to 120⁰C and the polyol was stripped under vacuum with a nitrogen sparge for 3 hours. The reactor was cooled to 90⁰C and 4.8 g of Irganox 1076 were added and the final polyol collected.

### Example 6 - Inventive

4697.8 g of molten BPA resin, 270.2 g of propylene glycol and 93.5 g of 45.4% aqueous potassium hydroxide solution was added to a 8 gallon reactor that was preheated to 100-105⁰C. The reactor was then sealed. While stirring, the reactor temperature was increased to 120⁰C. Oxygen was removed by filling the reactor with nitrogen to a pressure of 40 psia (2.8 bar [absolute]) and then venting the reactor to reduce the pressure to atmospheric pressure. This was repeated once. The reactor was then filled with nitrogen to a pressure of 20 psia (1.4 bar [absolute]). 4650.5 g of ethylene oxide ("EO") was then introduced over 2.25 hours. The maximum pressure observed during EO dosing was 38 psia (2.6 bar [absolute]). After completion of the ethoxylation the reactor was held at temperature for a sufficient time to react the ethylene oxide. Next, 2318.9 g of propylene oxide ("PO") was introduced over 1.5 hours. The maximum pressure observed during PO dosing was 45 psia (3.1 bar [absolute]). After completion of the propoxylation, the reactor was held at temperature for a sufficient time to react the propylene oxide. Next, the reactor was cooled to 80⁰C and 713 g of a 11% aqueous lactic acid solution was added. The temperature was increased to 120⁰C and the polyol was stripped under vacuum with a nitrogen sparge for 6 hours. The reactor was cooled to 90⁰C and 6 g of Irganox 1076 were added and the final polyol collected.

### Example 7 - Inventive

1848.9 g of molten BPA resin, 304.1 g of propylene glycol and 37.1 g of 45.4% aqueous potassium hydroxide solution was added to a 8 gallon reactor that was preheated to 100-105⁰C. The reactor was then sealed. While stirring, the reactor temperature was increased to 120⁰C. Oxygen was removed by filling the reactor with nitrogen to a pressure of 40 psia (2.8 bar [absolute]) and then venting the reactor to reduce the pressure to atmospheric pressure. This was repeated once. The reactor was then filled with nitrogen to a pressure of 20 psia (1.4 bar [absolute]). 1697.8 g of ethylene oxide ("EO") was then introduced over 0.9 hours. The maximum pressure observed during EO dosing was 48 psia (3.3 bar [absolute]). After completion of the ethoxylation the reactor was held at temperature for a sufficient time to react the ethylene oxide. Next, 845.9 g of propylene oxide was introduced over 0.6 hours. The maximum pressure observed during PO dosing was 52 psia (3.6 bar [absolute]). After completion of the propoxylation the reactor was held at temperature for a sufficient time to react the propylene oxide. Next, the reactor was cooled to 80⁰C and 738.0 g of a 3.9% aqueous lactic acid solution was added. The temperature was increased to 120⁰C and the polyol was stripped under vacuum with a nitrogen sparge for 24 hours. The reactor was cooled to 90⁰C and 2.4 g of Irganox 1076 were added and the final polyol collected.

### Example 8 - Inventive

1665.2 g of molten BPA resin, 186.6 g of propylene glycol and 29.0 g of 45.4% aqueous potassium hydroxide solution was added to a 8 gallon reactor that was preheated to 100-105⁰C. The reactor was then sealed. While stirring, the reactor temperature was increased to 120⁰C. Oxygen was removed by filling the reactor with nitrogen to a pressure of 40 psia (2.8 bar [absolute]) and then venting the reactor to reduce the pressure to atmospheric pressure. This was repeated once. The reactor was then filled with nitrogen to a pressure of 20 psia (1.4 bar [absolute]). 1237.0 g of ethylene oxide ("EO") was then introduced over 0.6 hours. The maximum pressure observed during EO dosing was 60 psia (4.1 bar [absolute]). After completion of the ethoxylation the reactor was held at temperature for a sufficient time to react the ethylene oxide. Next, 619.5 g of propylene oxide ("PO") was introduced over 0.5 hours. The maximum pressure observed during PO dosing was 57 psia (3.9 bar [absolute]). After completion of the propoxylation, the reactor was held at temperature for a sufficient time to react the propylene oxide. Next, the reactor was cooled to 80⁰C and 581.3 g of a 3.8% aqueous lactic acid solution was added. The temperature was increased to 120⁰C and the polyol was stripped under vacuum with a nitrogen sparge for 24 hours. The reactor was cooled to 90⁰C and 1.9 g of Irganox 1076 were added and the final polyol collected.

Table 1 summarizes the composition and properties of polyether polyols of Examples 1-8.

**Table 1**

| | Example 1 | Example 2 | Example 3 | Example 4 | Example 5 | Example 6 | Example 7 | Example 8 |
|---|---|---|---|---|---|---|---|---|
| BPA-resin (g) | 284.5 | 312.8 | 228.7 | 345.0 | 4385.1 | 4697.8 | 1848.9 | 1665.2 |
| PG (g) | 0 | 0 | 0 | 0 | 0 | 270.2 | 304.1 | 186.6 |
| 45.4% KOH catalyst solution (g) | 5.9 | 6.2 | 6.2 | 6.2 | 74.3 | 93.5 | 37.1 | 29.0 |
| Catalyst concentration (%) | 0.38 | 0.40 | 0.55 | 0.36 | 0.35 | 0.35 | 0.35 | 0.35 |
| EO (g) | 416.1 | 384.0 | 0 | 0 | 3227.0 | 4650.5 | 1697.8 | 1237.0 |
| PO (g) | 0 | 0 | 278.1 | 419.3 | 1857.8 | 2318.9 | 845.9 | 619.5 |
| Lactic acid solution (g) | 5.2 | 5.3 | 5.4 | 5.4 | 285.0 | 713.0 | 738.0 | 581.3 |
| Lactic acid Concentration | 88% | 88% | 88% | 88% | 20% | 11% | 3.9% | 3.8% |
| mole ratio lactic acid : KOH | 1.05 | 1.09 | 1.07 | 1.06 | 1.05 | 1.15 | 1.05 | 1.05 |
| Irganox 1076 (g) | 0.4 | 0.4 | 0.3 | 0.4 | 4.8 | 6.0 | 2.4 | 1.9 |
| % BPA-resin | 40.2 | 44.4 | 44.4 | 44.7 | 45.8 | 38.9 | 39.0 | 44.5 |
| %PG | 0 | 0 | 0 | 0 | 0.0 | 2.2 | 6.4 | 5.0 |
| Hydroxyl number (mg KOH/g) | 170 | 184 | 195 | 181 | 166 | 176 | 238 | 242 |
| Viscosity (mPa·s), 25 ⁰C | 2524 | 3703 | 7634 | 9719 | 4885 | 2058 | 1619 | 3451 |

### Examples 9-22

Foam-forming compositions were prepared using the ingredients and amounts (in parts by weight) set forth in Tables 2 and 3 below. The following materials were used:POLYOL 1: Stepanpol^{®} PS-2352 polyester polyol having a functionality of 2, an OH number of 235 mg KOH/g and a viscosity at 25°C of 3,000 cps, which is commercially available from the Stepan Company; POLYOL 2: A polyol produced by mixing the polyol produced in Example 1 with the polyol produced in Example 2; POLYOL 3: A polyol produced by mixing the polyol produced in Example 3 with the polyol produced in Example 4; POLYOL 4: The polyol produced in Example 5; POLYOL 5: The polyol produced in Example 6; POLYOL 6: The polyol produced in Example 8; POLYOL 7: The polyol produced in Example 7; CAT 2: Potassium octoate which is commercially available under the name Dabco^{®} K -15 from Air Products Company; CAT 1: Potassium acetate available under the name Polycate 46 from Air Products Company; CAT 3 : Tertiary amine-based catalyst available under the name Polycat^{®} 36 from Evonik Industries; SURF 2: Surfactant available under the name Tegostab^{®} B 8513 from Evonik Industries; SURF 1: Surfactant available under the name Tegostab^{®} B 8871 from Evonik Industries; FR: Halogenated flame retardant which is commercially available under the name Fyrol^{®} PCF from ICL-Supresta; CAT 4: Potassium 2-ethylhexanoate which is commercially available under the name PEL-CAT 9540-A from Elé Corporation; CAT 5 : Solution of potassium acetate in diethylene glycol which is commercially available under the name PEL-CAT 9650 from Elé Corporation; CAT 6 : Tertiary amine-based catalyst available under the name Polycat^{®} 36 from Evonik Industries; ISO: Polymeric MDI which is commercially available under the name Mondur^{®} 489 from Covestro LLC.

To prepare the foams, all B-side components (i.e., components included in the isocyanate-reactive component) with the exception of the blowing agent were blended with a mechanical flat blade turbine mixer. Blowing agent was added to the B-side resin blend and mixed briefly before the isocyanate was added and the resultant mixture was mixed at high speed for about 5 seconds. The mixture was then poured into a 12" (30.5 cm) x 12" (30.5 cm) x 2.5" (6.4 cm) cardboard box and the foam was allowed to rise freely. The rising foam surface was gently probed with a wooden stick to determine string gel and tack free time.

**Table 2**

| Chemical | Example Number | | | | | | | | |
|---|---|---|---|---|---|---|---|---|---|
| | 9 | 10 | 11 | 12 | 13 | 14 | 15 | 16 | 17 |
| POLYOL 1 | 100.00 | - | 100.00 | -- | 100.00 | -- | 100.00 | - | - |
| POLYOL 2 | - | 30.00 | - | -- | -- | - | - | - | -- |
| POLYOL 3 | - | 70.00 | - | -- | -- | - | - | - | - |
| POLYOL 4 | - | - | - | 100.00 | - | - | - | - | -- |
| POLYOL 5 | - | - | - | - | - | 100.00 | - | - | - |
| POLYOL 6 | - | - | - | - | - | - | - | 100.00 | - |
| POLYOL 7 | - | - | - | - | - | - | - | - | 100.00 |
| FR | 12.50 | 12.27 | 12.50 | 12.87 | 12.50 | 12.67 | 12.50 | 12.50 | 12.50 |
| SURF 1 | 2.50 | 2.50 | 2.50 | 2.50 | 2.50 | 2.50 | 2.50 | 2.50 | 2.50 |
| WATER | 0.32 | 0.32 | 0.32 | 0.32 | 0.32 | 0.32 | 0.32 | 0.32 | 0.32 |
| CAT 1 | 0.77 | 0.47 | 0.77 | 0.81 | 0.77 | 0.78 | 0.77 | 0.77 | 0.77 |
| CAT 2 | 6.15 | 3.76 | 6.15 | 6.44 | 6.15 | 6.17 | 6.15 | 6.15 | 6.15 |
| CAT 3 | 0.28 | 0.17 | 0.27 | 0.28 | 0.27 | 0.26 | 0.27 | 0.27 | 0.27 |
| ISOPENTANE | 11.75 | 11.20 | 11.75 | 13.63 | 11.75 | 12.50 | 11.75 | 12.40 | 11.50 |
| N-PENTANE | 11.75 | 11.20 | 11.75 | 13.63 | 11.75 | 12.50 | 11.75 | 12.40 | 11.50 |
| ISO | 185.05 | 151.86 | 185.05 | 190.52 | 185.05 | 187.27 | 185.05 | 184.93 | 185.01 |

| Properties | | | | | | | | | |
|---|---|---|---|---|---|---|---|---|---|
| Index | 249.8 | 269.3 | 249.8 | 337.1 | 249.8 | 320.0 | 249.8 | 248.0 | 251.4 |
| Mix (sec) | 4 | 3 | 5 | 4 | 5 | 3 | 5 | 5 | 5 |
| Cream Time (sec) | 5 | 4 | 6 | 5 | 6 | 4 | 6 | 6 | 6 |
| Gel Time (sec) | 14 | 15 | 15 | 15 | 15 | 15 | 12 | 14 | 14 |
| Tack Free Time (sec) | 24 | 79 | 25 | 35 | 30 | 54 | 24 | 31 | 27 |
| Density (lb/ft³) | 1.62 | 1.63 | 1.61 | 1.63 | 1.57 | 1.57 | 1.70 | 1.65 | 1.77 |

**Table 3**

| Chemical | Example Number | | | | |
|---|---|---|---|---|---|
| | 18 | 19 | 20 | 21 | 22 |
| POLYOL 1 | 66.04 | - | 66.04 | - | - |
| POLYOL 5 | - | 66.04 | - | - | - |
| POLYOL 6 | - | - | - | 66.04 | - |
| POLYOL 7 | - | - | - | - | 66.04 |
| FR | 21.56 | 22.40 | 21.56 | 21.56 | 21.56 |
| SURF 2 | 1.75 | 1.75 | 1.75 | 1.75 | 1.75 |
| CAT 4 | 2.91 | 3.58 | 2.91 | 2.91 | 2.05 |
| CAT 5 | 0.62 | 0.75 | 0.62 | 0.62 | 0.44 |
| CAT 6 | 0.23 | 0.28 | 0.23 | 0.23 | 0.17 |
| WATER | 1.40 | 1.40 | 1.40 | 1.40 | 1.4 |
| PENTANE | 5.35 | 6.50 | 5.35 | 5.65 | 5.35 |
| ISOPENTANE | 5.35 | 6.50 | 5.35 | 5.65 | 5.35 |
| ISO | 191.75 | 199.13 | 191.75 | 191.68 | 187.62 |

| Properties | | | | | |
|---|---|---|---|---|---|
| Total Resin | 105.21 | 109.20 | 105.21 | 105.81 | 104.11 |
| Total Isocyanate | 191.75 | 199.13 | 191.75 | 191.68 | 187.62 |
| Index | 301.6 | 365.5 | 301.6 | 300.0 | 303.3 |
| Mix (sec) | 8 | 5 | 7 | 8 | 7 |
| Cream Time (sec) | 16 | 6 | 18 | 10 | 8 |
| Gel Time (sec) | 42 | 42 | 30 | 30 | 29 |
| Tack Free Time (sec) | 92 | 128 | 65 | 90 | 107 |
| Density (lb/ft³) | 1.96 | 1.97 | 2.19 | 2.29 | 2.15 |

As is apparent, POLYOLS 5, 6, and 7 had viscosities and hydroxyl numbers similar to POLYOL 1 and allowed for production of foams having a similar gel time to those using POLYOL 1 while using similar catalyst compositions. Thus, POLYOLS 5, 6, and 7 are candidates for use as a simple "drop-in" replacement for POLYOL 1 in the production of PUR-PIR rigid foams by a continuous lamination process.

## Claims

1. A polyether polyol, preferably having an arithmetically calculated functionality of 1.5 to 3, a viscosity at 25°C of 1000 to 4900 mPa • s and/or a measured hydroxyl number of 120 to 300 mg KOH/g, the polyether polyol comprising:
(a) an alkoxylate of 4,4'-isopropylidenediphenol;
(b) an alkoxylate of 2,4'- isopropylidenediphenol, 2,2'-isopropylidenediphenol or a mixture thereof;
(c) an alkoxylate of components comprising structural elements which are derived from phenol, acetone, isopropylidenediphenol or a mixture of any two or more thereof, but which are not isomers of isopropylidenediphenol; and
(d) an alkoxylate of a diol that has a molecular weight less than the molecular weight of isopropylidenediphenol and that does not contain structural elements derived from phenol, acetone, isopropylidenediphenol, or a mixture of any two or more thereof,
wherein the alkoxylate of the diol that has a molecular weight less than the molecular weight of isopropylidenediphenol is present in an amount of 0.1 to 10% by weight, based on the total weight of the polyether polyol.

2. The polyether polyol of claim 1, wherein:
(i) the alkoxylate of 4,4'-isopropylidenediphenol is present in an amount of at least 10% by weight, based on the total weight of the polyether polyol;
(ii) the alkoxylate of 2,4'- isopropylidenediphenol, 2,2'-isopropylidenediphenol, or a mixture thereof is present in an amount of at least 5% by weight, based on the total weight of the polyether polyol; and
(iii) the alkoxylate of components comprising structural elements which are derived from phenol, acetone, isopropylidenediphenol, or a mixture of any two or more thereof, but which are not isomers of isopropylidenediphenol, is present in an amount of at least 10% by weight, based on the total weight of the polyether polyol.

3. The polyether polyol of claim 2, wherein the alkoxylate of a diol that has a molecular weight less than the molecular weight of isopropylidenediphenol and that does not contain structural elements derived from phenol, acetone, isopropylidenediphenol, or a mixture of any two or more thereof, comprises an alkoxylate of ethylene glycol, an alkoxylate of propylene glycol, an alkoxylate of dipropylene glycol, an alkoxylate of diethylene glycol, an alkoxylate of 1,2-diphenyl-ethane-1,2-diol, an alkoxylate of triethylene glycol, an alkoxylate of butylene glycol, an alkoxylate of cyclohexanediol, an alkoxylate of cyclohexane-1,4-dimethanol, an alkoxylate of pentanediol, an alkoxylate of hexanediol, an alkoxylate of neopentyl glycol, or a mixture of any two or more thereof.

4. The polyether polyol of claim 2 or 3, wherein the diol that has a molecular weight less than the molecular weight of isopropylidenediphenol and that does not contain structural elements derived from phenol, acetone, isopropylidenediphenol, or a mixture of any two or more thereof has a molar mass of less than 100 g/mol.

5. The polyether polyol of any one of claims 1 to 4, wherein the polyether polyol comprises an internal block comprising polymerized ethylene oxide moieties and an external cap comprising polymerized propylene oxide moieties.

6. The polyether polyol of claim 5, wherein polymerized ethylene oxide moieties are present in an amount of least 50% by weight, based on the total weight of the polymerized alkylene oxide moieties of the internal block of the polyether polyol and polymerized propylene oxide moieties are present in an amount of least 50% by weight, based on the total weight of the polymerized alkylene oxide moieties of the external cap of the polyether polyol.

7. The polyether polyol of any one of claims 1 to 6, wherein the components comprising structural elements which are derived from phenol, acetone, isopropylidenediphenol, or a mixture of any two or more thereof, but which are not isomers of isopropylidenediphenol, comprise compounds with a chromane and/or indane base body, in particular any one or more of the following compounds:
4-(2,2,4-trimethyl-3.4-dihydro-2H-chromen-4-yl)phenol, 4-(2,4,4-trimethyl-3-4-dihydro-2H-chromen-2-yl)phenol, 3-(4-hydroxyphenyl)-1,1,3-trimethyl-2H-inden-5-ol, and 1-(4-hydroxyphenyl)-1,3,3-trimethyl-2H-inden-5-ol.

8. A PUR-PIR rigid foam-forming reaction mixture comprising: (a) a polyisocyanate; (b) the polyether polyol of any one of claims 1 to 7; and (c) a chemical blowing agent.

9. A method of forming a PUR-PIR rigid foam comprising reacting a polyisocyanate with the polyether polyol of any one of claims 1 to 8, wherein the polyisocyanate is present in an amount sufficient to provide an isocyanate index of 180 to 450, and wherein the reaction occurs in the presence of components comprising a blowing agent and a catalyst.

10. A process for preparing a polyether polyol, preferably having an arithmetically calculated functionality of 1.5 to 3, a viscosity at 25°C of 1000 to 4900 mPa • s, and/or a measured hydroxyl number of 120 to 300 mg KOH/g, the process comprising alkoxylating, in the presence of a catalyst, an active hydrogen-containing initiator composition comprising:
(i) 4,4'-isopropylidenediphenol;
(ii) 2,4'- isopropylidenediphenol, 2,2'-isopropylidenediphenol, or a mixture thereof;
(iii) a component comprising structural elements which are derived from phenol, acetone, isopropylidenediphenol, or a mixture of any two or more thereof, but which are not isomers of isopropylidenediphenol; and
(iv) 0.1 to 20% by weight by weight, based on the total weight of the active hydrogen-containing initiator composition, of a diol that has a molecular weight less than the molecular weight of isopropylidenediphenol and that does not contain structural elements derived from phenol, acetone, isopropylidenediphenol, or a mixture of any two or more thereof.

11. The process of claim 10, wherein the active hydrogen-containing initiator composition comprises:
(i) at least 10% by weight of 4,4'-isopropylidenediphenol, based on the total weight of the active hydrogen-containing initiator composition;
(ii) at least 5% by weight by weight of 2,4'- isopropylidenediphenol, 2,2'-isopropylidenediphenol, or a mixture thereof, based on the total weight of the active hydrogen-containing initiator composition; and
(iii) at least 10% by weight of compounds with chromane base body, indane base bodies, or a mixture thereof,
which comprise in particular any one or more of the following compounds:
4-(2,2,4-trimethyl-3.4-dihydro-2H-chromen-4-yl)phenol, 4-(2,4,4-trimethyl-3-4-dihydro-2H-chromen-2-yl)phenol, 3-(4-hydroxyphenyl)-1,1,3-trimethyl-2H-inden-5-ol, and 1-(4-hydroxyphenyl)-1,3,3-trimethyl-2H-inden-5-ol,
based on the total weight of the active hydrogen-containing initiator composition.

12. The process of claim 10 or 11, wherein the diol that has a molecular weight less than the molecular weight of isopropylidenediphenol and that does not contain structural elements derived from phenol, acetone, isopropylidenediphenol, or a mixture of any two or more thereof comprises ethylene glycol, propylene glycol, dipropylene glycol, diethylene glycol, 1,2-diphenyl-ethane-1,2-diol, triethylene glycol, butylene glycol, cyclohexanediol, cyclohexane-1,4-dimethanol, pentanediol, hexanediol, neopentyl glycol, or a mixture of any two or more thereof.

13. The process of any one of claims 10 to 12, wherein the diol that has a molecular weight less than the molecular weight of isopropylidenediphenol and that does not contain structural elements derived from phenol, acetone, isopropylidenediphenol, or a mixture of any two or more thereof has a molar mass of less than 100 g/mol.

14. The process of any one of claims 10 to 13, wherein the alkoxylation comprises reacting the active hydrogen-containing initiator composition with a first portion of alkylene oxide, in the presence of a catalyst, to form an intermediate polymer having at least one hydroxyl end-group, and then reacting the intermediate polymer with a second portion of alkylene oxide to form the polyether polyol.

15. The process of claim 14, wherein ethylene oxide is present in the first portion of alkylene oxide in an amount of at least 50% by weight, based on the total weight of the first portion of alkylene oxide, and propylene oxide is present in the second portion of alkylene oxide in an amount of at least 50% by weight, based on the total weight of the second portion of alkylene oxide.

## Patentansprüche

1. Polyetherpolyol, vorzugsweise mit einer arithmetisch berechneten Funktionalität von 1,5 bis 3, einer Viskosität bei 25 °C von 1000 bis 4900 mPa·s und/oder einer gemessenen Hydroxylzahl von 120 bis 300 mg KOH/g, wobei das Polyetherpolyol Folgendes umfasst:
(a) ein Alkoxylat von 4,4'-Isopropylidendiphenol;
(b) ein Alkoxylat von 2,4'-Isopropylidendiphenol, 2,2'-Isopropylidendiphenol oder einem Gemisch davon;
(c) ein Alkoxylat von Komponenten mit Strukturelementen, die von Phenol, Aceton, Isopropylidendiphenol oder einer Mischung von zwei oder mehr davon abgeleitet sind, aber nicht Isomere des Isopropylidendiphenols sind; und
(d) ein Alkoxylat eines Diols, das ein kleineres Molekulargewicht als Isopropylidendiphenol aufweist und das keine Strukturelemente, die von Phenol, Aceton, Isopropylidendiphenol oder einer Mischung von zwei oder mehr davon abgeleitet sind, enthält,
wobei das Alkoxylat des Diols, das ein kleineres Molekulargewicht als Isopropylidendiphenol aufweist, in einer Menge von 0,1 bis 10 Gew.-%, bezogen auf das Gesamtgewicht des Polyetherpolyols, vorliegt.

2. Polyetherpolyol nach Anspruch 1, wobei:
(i) das Alkoxylat von 4,4'-Isopropylidendiphenol in einer Menge von mindestens 10 Gew.-%, bezogen auf das Gesamtgewicht des Polyetherpolyols, vorliegt;
(ii) das Alkoxylat von 2,4'-Isopropylidendiphenol, 2,2'-Isopropylidendiphenol oder einem Gemisch davon in einer Menge von mindestens 5 Gew.-%, bezogen auf das Gesamtgewicht des Polyetherpolyols, vorliegt und
(iii) das Alkoxylat von Komponenten mit Strukturelementen, die von Phenol, Aceton, Isopropylidendiphenol oder einer Mischung von zwei oder mehr davon abgeleitet sind, aber nicht Isomere des Isopropylidendiphenols sind, in einer Menge von mindestens 10 Gew.-%, bezogen auf das Gesamtgewicht des Polyetherpolyols, vorliegt.

3. Polyetherpolyol nach Anspruch 2, wobei das Alkoxylat eines Diols, das ein kleineres Molekulargewicht als Isopropylidendiphenol aufweist und das keine Strukturelemente, die von Phenol, Aceton, Isopropylidendiphenol oder einer Mischung von zwei oder mehr davon abgeleitet sind, enthält, ein Alkoxylat von Ethylenglykol, ein Alkoxylat von Propylenglykol, ein Alkoxylat von Dipropylenglykol, ein Alkoxylat von Diethylenglykol, ein Alkoxylat von 1,2-Diphenylethan-1,2-diol, ein Alkoxylat von Triethylenglykol, ein Alkoxylat von Butylenglykol, ein Alkoxylat von Cyclohexandiol, ein Alkoxylat von Cyclohexan-1,4-dimethanol, ein Alkoxylat von Pentandiol, ein Alkoxylat von Hexandiol, ein Alkoxylat von Neopentylglykol oder ein Gemisch von zwei oder mehr davon umfasst.

4. Polyetherpolyol nach Anspruch 2 oder 3, wobei das Diol, das ein kleineres Molekulargewicht als Isopropylidendiphenol aufweist und das keine Strukturelemente, die von Phenol, Aceton, Isopropylidendiphenol oder einer Mischung von zwei oder mehr davon abgeleitet sind, enthält, eine Molmasse von weniger als 100 g/mol aufweist.

5. Polyetherpolyol nach einem der Ansprüche 1 bis 4, wobei das Polyetherpolyol einen inneren Block, der polymerisierte Ethylenoxid-Gruppierungen umfasst, und eine äußere Kappe, die polymerisierte Propylenoxid-Gruppierungen umfasst, umfasst.

6. Polyetherpolyol nach Anspruch 5, wobei polymerisierte Ethylenoxid-Gruppierungen in einer Menge von mindestens 50 Gew.-%, bezogen auf das Gesamtgewicht der polymerisierten Alkylenoxid-Gruppierungen des inneren Blocks des Polyetherpolyols, vorliegen und polymerisierte Propylenoxid-Gruppierungen in einer Menge von mindestens 50 Gew.-%, bezogen auf das Gesamtgewicht der polymerisierten Alkylenoxid-Gruppierungen der äußeren Kappe des Polyetherpolyols, vorliegen.

7. Polyetherpolyol nach einem der Ansprüche 1 bis 6, wobei die Komponenten mit Strukturelementen, die von Phenol, Aceton, Isopropylidendiphenol oder einer Mischung von zwei oder mehr davon abgeleitet sind, aber nicht Isomere des Isopropylidendiphenols sind, Verbindungen mit einem Chroman- und/oder Indan-Grundkörper umfassen, insbesondere eine oder mehrere der folgenden Verbindungen:
4-(2,2,4-Trimethyl-3.4-dihydro-2H-chromen-4-yl)phenol, 4-(2,4,4-Trimethyl-3-4-dihydro-2H-chromen-2-yl)phenol, 3-(4-Hydroxyphenyl)-1,1,3-trimethyl-2H-inden-5-ol und 1-(4-Hydroxyphenyl)-1,3,3-trimethyl-2H-inden-5-ol.

8. PUR-PIR-Hartschaumstoff bildende Reaktionsmischung, umfassend: (a) ein Polyisocyanat; (b) das Polyetherpolyol nach einem der Ansprüche 1 bis 7 und (c) ein chemisches Treibmittel.

9. Verfahren zum Bilden eines PUR-PIR-Hartschaumstoffs, umfassend das Umsetzen eines Polyisocyanats mit dem Polyetherpolyol nach einem der Ansprüche 1 bis 8, wobei das Polyisocyanat in einer zur Bereitstellung eines Isocyanat-Index von 180 bis 450 ausreichenden Menge vorliegt und wobei die Umsetzung in Gegenwart von Komponenten, die ein Treibmittel und einen Katalysator umfassen, erfolgt.

10. Verfahren zur Herstellung eines Polyetherpolyols, vorzugsweise mit einer arithmetisch berechneten Funktionalität von 1,5 bis 3, einer Viskosität bei 25 °C von 1000 bis 4900 mPa·s und/oder einer gemessenen Hydroxylzahl von 120 bis 300 mg KOH/g, wobei das Verfahren das Alkoxylieren einer Zusammensetzung von aktiven Wasserstoff enthaltenden Initiatoren, umfassend:
(i) 4,4'-Isopropylidendiphenol;
(ii) 2,4'-Isopropylidendiphenol, 2,2'-Isopropylidendiphenol oder ein Gemisch davon;
(iii) eine Komponente mit Strukturelementen, die von Phenol, Aceton, Isopropylidendiphenol oder einer Mischung von zwei oder mehr davon abgeleitet sind, aber nicht Isomere des Isopropylidendiphenols sind; und
(iv) 0,1 bis 20 Gew.-%, bezogen auf das Gesamtgewicht der Zusammensetzung von aktiven Wasserstoff enthaltenden Initiatoren, eines Diols, das ein kleineres Molekulargewicht als Isopropylidendiphenol aufweist und das keine Strukturelemente, die von Phenol, Aceton, Isopropylidendiphenol oder einer Mischung von zwei oder mehr davon abgeleitet sind, enthält,
in Gegenwart eines Katalysators umfasst.

11. Verfahren nach Anspruch 10, wobei die Zusammensetzung von aktiven Wasserstoff enthaltenden Initiatoren
(i) mindestens 10 Gew.-% 4,4'-Isopropylidendiphenol, bezogen auf das Gesamtgewicht der Zusammensetzung von aktiven Wasserstoff enthaltenden Initiatoren;
(ii) mindestens 5 Gew.-% 2,4'-Isopropylidendiphenol, 2,2'-Isopropylidendiphenol oder eines Gemischs davon, bezogen auf das Gesamtgewicht der Zusammensetzung von aktiven Wasserstoff enthaltenden Initiatoren; und
(iii) mindestens 10 Gew.-% Verbindungen mit Chroman-Grundkörper, Indan-Grundkörpern oder eines Gemischs davon,
die insbesondere eine oder mehrere der folgenden Verbindungen umfassen:
4-(2,2,4-Trimethyl-3.4-dihydro-2H-chromen-4-yl)phenol, 4-(2,4,4-Trimethyl-3-4-dihydro-2H-chromen-2-yl)phenol, 3-(4-Hydroxyphenyl)-1,1,3-trimethyl-2H-inden-5-ol und 1-(4-Hydroxyphenyl)-1,3,3-trimethyl-2H-inden-5-ol,
bezogen auf das Gesamtgewicht der Zusammensetzung von aktiven Wasserstoff enthaltenden Initiatoren, umfasst,

12. Verfahren nach Anspruch 10 oder 11, wobei das Diol, das ein kleineres Molekulargewicht als Isopropylidendiphenol aufweist und das keine Strukturelemente, die von Phenol, Aceton, Isopropylidendiphenol oder einer Mischung von zwei oder mehr davon abgeleitet sind, enthält, Ethylenglykol, Propylenglykol, Dipropylenglykol, Diethylenglykol, 1,2-Diphenylethan-1,2-diol, Triethylenglykol, Butylenglykol, Cyclohexandiol, Cyclohexan-1,4-dimethanol, Pentandiol, Hexandiol, Neopentylglykol oder ein Gemisch von zwei oder mehr davon umfasst.

13. Verfahren nach einem der Ansprüche 10 bis 12, wobei das Diol, das ein kleineres Molekulargewicht als Isopropylidendiphenol aufweist und das keine Strukturelemente, die von Phenol, Aceton, Isopropylidendiphenol oder einer Mischung von zwei oder mehr davon abgeleitet sind, enthält, eine Molmasse von weniger als 100 g/mol aufweist.

14. Verfahren nach einem der Ansprüche 10 bis 13, wobei die Alkoxylierung das Umsetzen der Zusammensetzung von aktiven Wasserstoff enthaltenden Initiatoren mit einer ersten Portion von Alkylenoxid in Gegenwart eines Katalysators zur Bildung eines intermediären Polymers mit mindestens einer Hydroxylendgruppe und das anschließende Umsetzen des intermediären Polymers mit einer zweiten Portion von Alkylenoxid zur Bildung des Polyetherpolyols umfasst.

15. Verfahren nach Anspruch 14, wobei Ethylenoxid in der ersten Portion von Alkylenoxid in einer Menge von mindestens 50 Gew.-%, bezogen auf das Gesamtgewicht der ersten Portion von Alkylenoxid, vorliegt und Propylenoxid in der zweiten Portion von Alkylenoxid in einer Menge von mindestens 50 Gew.-%, bezogen auf das Gesamtgewicht der zweiten Portion von Alkylenoxid, vorliegt.

## Revendications

1. Polyéther polyol, préférablement ayant une fonctionnalité calculée de manière arithmétique de 1,5 à 3, une viscosité à 25 °C de 1 000 à 4 900 mPa.s et/ou un indice d'hydroxyle mesuré de 120 à 300 mg de KOH/g, le polyéther polyol comprenant :
(a) un alcoxylate de 4,4'-isopropylidènediphénol ;
(b) un alcoxylate de 2,4'-isopropylidènediphénol, 2,2'-isopropylidènediphénol ou d'un mélange correspondant ;
(c) un alcoxylate de composants comprenant des éléments structuraux qui sont issus du phénol, de l'acétone, de l'isopropylidènediphénol ou d'un mélange de deux quelconques ou plus de ceux-ci, mais qui ne sont pas des isomères d'isopropylidènediphénol ; et
(d) un alcoxylate d'un diol qui possède un poids moléculaire inférieur au poids moléculaire d'isopropylidènediphénol et qui ne contient aucun élément structural issu du phénol, de l'acétone, de l'isopropylidènediphénol ou d'un mélange de deux quelconques ou plus de ceux-ci,
l'alcoxylate du diol qui possède un poids moléculaire inférieur au poids moléculaire d'isopropylidènediphénol étant présent en une quantité de 0,1 à 10 % en poids, sur la base du poids total du polyéther polyol.

2. Polyéther polyol selon la revendication 1,
(i) l'alcoxylate de 4,4'-isopropylidènediphénol étant présent en une quantité d'au moins 10 % en poids, sur la base du poids total du polyéther polyol ;
(ii) l'alcoxylate de 2,4'-isopropylidènediphénol, 2,2'-isopropylidènediphénol ou d'un mélange correspondant étant présent en une quantité d'au moins 5 % en poids, sur la base du poids total du polyéther polyol ; et
(iii) l'alcoxylate de composants comprenant des éléments structuraux qui sont issus du phénol, de l'acétone, de l'isopropylidènediphénol ou d'un mélange de deux quelconques ou plus de ceux-ci, mais qui ne sont pas des isomères d'isopropylidènediphénol, étant présent en une quantité d'au moins 10 % en poids, sur la base du poids total du polyéther polyol.

3. Polyéther polyol selon la revendication 2, l'alcoxylate d'un diol qui possède un poids moléculaire inférieur au poids moléculaire d'isopropylidènediphénol et qui ne contient aucun élément structural issu du phénol, de l'acétone, de l'isopropylidènediphénol ou d'un mélange de deux quelconques ou plus de ceux-ci, comprenant un alcoxylate d'éthylène glycol, un alcoxylate de propylèneglycol, un alcoxylate de dipropylèneglycol, un alcoxylate de diéthylèneglycol, un alcoxylate de 1,2-diphényl-éthane-1,2-diol, un alcoxylate de triéthylèneglycol, un alcoxylate de butylèneglycol, un alcoxylate de cyclohexanediol, un alcoxylate de cyclohexane-1,4-diméthanol, un alcoxylate de pentanediol, un alcoxylate d'hexanediol, un alcoxylate de néopentylglycol, ou un mélange de deux quelconques ou plus de ceux-ci.

4. Polyéther polyol selon la revendication 2 ou 3, le diol qui possède un poids moléculaire inférieur au poids moléculaire d'isopropylidènediphénol et qui ne contient aucun élément structural issu du phénol, de l'acétone, de l'isopropylidènediphénol ou d'un mélange de deux quelconques ou plus de ceux-ci ayant une masse molaire de moins de 100 g/mole.

5. Polyéther polyol selon l'une quelconque des revendications 1 à 4, le polyéther polyol comprenant un bloc interne comprenant des groupements d'oxyde d'éthylène polymérisés et une coiffe externe comprenant des groupements d'oxyde de propylène polymérisés.

6. Polyéther polyol selon la revendication 5, les groupements d'oxyde d'éthylène polymérisés étant présents en une quantité d'au moins 50 % en poids, sur la base du poids total des groupements d'oxyde d'alkylène polymérisés du bloc interne du polyéther polyol et les groupements d'oxyde de propylène polymérisés étant présents en une quantité d'au moins 50 % en poids, sur la base du poids total des groupements d'oxyde d'alkylène polymérisés de la coiffe externe du polyéther polyol.

7. Polyéther polyol selon l'une quelconque des revendications 1 à 6, les composants comprenant des éléments structuraux qui sont issus du phénol, de l'acétone, de l'isopropylidènediphénol ou d'un mélange de deux quelconques ou plus de ceux-ci, mais qui ne sont pas des isomères d'isopropylidènediphénol, comprenant des composés dotés d'un corps de base de chromane et/ou d'indane, en particulier l'un quelconque ou plusieurs parmi les composés suivants :
4-(2,2,4-triméthyl-3.4-dihydro-2H-chromén-4-yl)phénol, 4-(2,4,4-triméthyl-3-4-dihydro-2H-chromén-2-yl)phénol, 3-(4-hydroxyphényl)-1,1,3-triméthyl-2H-indén-5-ol, et 1-(4-hydroxyphényl)-1,3,3-triméthyl-2H-indén-5-ol.

8. Mélange réactionnel de formation d'une mousse rigide PUR-PIR comprenant : (a) un polyisocyanate ; (b) le polyéther polyol selon l'une quelconque des revendications 1 à 7 ; et (c) un agent de gonflement chimique.

9. Procédé de formation d'une mousse rigide PUR-PIR comprenant la mise en réaction d'un polyisocyanate avec le polyéther polyol selon l'une quelconque des revendications 1 à 8, le polyisocyanate étant présent en une quantité suffisante pour fournir un indice d'isocyanate de 180 à 450, et la réaction ayant lieu en la présence de composants comprenant un agent de gonflement et un catalyseur.

10. Processus pour la préparation d'un polyéther polyol, préférablement ayant une fonctionnalité calculée de manière arithmétique de 1,5 à 3, une viscosité à 25 °C de 1 000 à 4 900 mPa.s et/ou un indice d'hydroxyle mesuré de 120 à 300 mg de KOH/g, le procédé comprenant une alcoxylation, en la présence d'un catalyseur, d'une composition d'initiateur contenant un hydrogène actif comprenant :
(i) du 4,4'-isopropylidènediphénol ;
(ii) du 2,4'-isopropylidènediphénol, 2,2'-du isopropylidènediphénol ou un mélange correspondant ;
(iii)un composant comprenant des éléments structuraux qui sont issus du phénol, de l'acétone, de l'isopropylidènediphénol ou d'un mélange de deux quelconques ou plus de ceux-ci, mais qui ne sont pas des isomères d'isopropylidènediphénol ; et
(iv) 0,1 à 20 % en poids, sur la base du poids total de la composition d'initiateur contenant un hydrogène actif, d'un diol qui possède un poids moléculaire inférieur au poids moléculaire d'isopropylidènediphénol et qui ne contient aucun élément structural issu du phénol, de l'acétone, de l'isopropylidènediphénol ou d'un mélange de deux quelconques ou plus de ceux-ci .

11. Procédé selon la revendication 10, la composition d'initiateur contenant un hydrogène actif comprenant :
(i) au moins 10 % en poids de 4,4'-isopropylidènediphénol, sur la base du poids total de la composition d'initiateur contenant un hydrogène actif ;
(ii) au moins 5 % en poids de 2,4'-isopropylidènediphénol, de 2,2'-isopropylidènediphénol ou d'un mélange correspondant, sur la base du poids total de la composition d'initiateur contenant un hydrogène actif ;
(iii) au moins 10 % en poids de composés dotés d'un corps de base de chromane, de corps de base d'indane, ou d'un mélange correspondant,
qui comprend en particulier l'un quelconque ou plusieurs parmi les composés suivants :
4-(2,2,4-triméthyl-3.4-dihydro-2H-chromén-4-yl)phénol, 4-(2,4,4-triméthyl-3-4-dihydro-2H-chromén-2-yl)phénol, 3-(4-hydroxyphényl)-1,1,3-triméthyl-2H-indén-5-ol, et 1-(4-hydroxyphényl)-1,3,3-triméthyl-2H-indén-5-ol,
sur la base du poids total de la composition d'initiateur contenant un hydrogène actif.

12. Procédé selon la revendication 10 ou 11, le diol qui possède un poids moléculaire inférieur au poids moléculaire d'isopropylidènediphénol et qui ne contient aucun élément structural issu du phénol, de l'acétone, de l'isopropylidènediphénol ou d'un mélange de deux quelconques ou plus de ceux-ci, comprenant l'éthylène glycol, le propylèneglycol, le dipropylèneglycol, le diéthylèneglycol, le 1,2-diphényl-éthane-1,2-diol, le triéthylèneglycol, le butylèneglycol, le cyclohexanediol, le cyclohexane-1,4-diméthanol, le pentanediol, l'hexanediol, le néopentylglycol, ou un mélange de deux quelconques ou plus de ceux-ci.

13. Procédé selon l'une quelconque des revendications 10 à 12, le diol qui possède un poids moléculaire inférieur au poids moléculaire d'isopropylidènediphénol et qui ne contient aucun élément structural issu du phénol, de l'acétone, de l'isopropylidènediphénol ou d'un mélange de deux quelconques ou plus de ceux-ci possédant une masse molaire de moins de 100 g/mole.

14. Procédé selon l'une quelconque des revendications 10 à 13, l'alcoxylation comprenant la mise en réaction de la composition d'initiateur contenant un hydrogène actif avec une première partie d'oxyde d'alkylène, en la présence d'un catalyseur, pour former un polymère intermédiaire ayant au moins un groupe terminal hydroxyle, et ensuite la mise en réaction du polymère intermédiaire avec une deuxième partie d'oxyde d'alkylène pour former le polyéther polyol.

15. Procédé selon la revendication 14, l'oxyde d'éthylène étant présent dans la première partie d'oxyde d'alkylène en une quantité d'au moins 50 % en poids, sur la base du poids total de la première partie d'oxyde d'alkylène, et l'oxyde de propylène étant présent dans la deuxième partie d'oxyde d'alkylène en une quantité d'au moins 50 % en poids, sur la base du poids total de la deuxième partie d'oxyde d'alkylène.
